# EUROPEAN PATENT SPECIFICATION

(11) **EP 4 233 564 B1**
(45) Date of publication and mention of the grant of the patent: **21.10.2026**
(21) Application number: 23174981.3
(22) Date of filing: 18.06.2020
(51) Int. Cl.: A23L 2/66, A23D 7/005, A23L 29/10, A23L 33/185

(54) **HEAT STABLE RAPESEED PROTEIN COMPOSITION**
HITZESTABILE RAPSPROTEINZUSAMMENSETZUNG
COMPOSITION DE PROTÉINE DE COLZA STABLE À LA CHALEUR

(30) Priority: 21.06.2019 EP 19181693
(43) Date of publication of application: 30.08.2023
(62) Document number(s) of the earlier application(s) in accordance with Art. 76 EPC: 20732937.6 / 3 986 156
(73) Proprietor: DSM IP Assets B.V., 6221 BE Maastricht (NL)
(72) Inventor: CHIEN, Ya-Hui, 6100 AA Echt (NL); SEIN, Arjen, 6100 AA Echt (NL); VINK, Johanna Corline Margriet, 6100 AA Echt (NL)
(74) Representative: dsm-firmenich IP

(56) References cited:
- WO-A1-2017/102535
- WO-A1-2018/007508
- WO-A2-2008/017039

## Description

### Field of the invention

The present invention is directed to a composition comprising rapeseed protein, a hydrocolloid, and a vegetable oil, and to the use of such composition in food products such as a beverage.

### Background of the invention

Food products comprising plant proteins as alternative to animal-derived proteins nowadays receive attention because of consumer concerns about the environmental impact of animal-based products and the beneficial nutritional characteristics of plant-based foods. In particular, beverages based on plant proteins as alternative to dairy products such as milk, yoghurt or ice cream have gained popularity. Plant proteins may be derived from a variety of legumes and pulses such as soybean, pea, chickpea, fava bean, lentil, mung bean, peanut, lupin; oil seeds/cabbages such as rapeseed or canola, sunflower, camelina, sesame; cereals and pseudo cereals, such as wheat, barley, oat, rice, sorghum, quinoa, buckwheat; nuts, such as almond, hazelnut, walnut, cashew; coconut; nightshades such as potato.

Unfortunately, addition of plant proteins into food products with a high water activity/content, such as beverages, can lead to physio-chemical instability issues such as protein sedimentation or precipitation of food particles. This occurs particularly upon heat treatment such as is necessary in order to pasteurize or sterilize the product for shelf life. In WO 2018/122021 this problem has been addressed by subjecting the aqueous plant-protein composition to mixing at high shear rate and high shear load as part of the manufacturing process of the beverage.

Furthermore, in foods with a high water content, such as beverages, plant proteins are perceived as astringent, often an unwanted sensory attribute.

The instant invention is concerned with food products such as a beverage comprising a particular plant protein, rapeseed protein. Unfortunately, this protein usually is no exception to the problems outlined above, *i.e*. aggregation and/or sedimentation can occur under certain circumstances used during the production of beverages. For example, many beverage applications require a pasteurization or a sterilization step during the production stage. A problem associated with the use of rapeseed protein in beverages is that aggregation occurs after treatment at elevated temperatures. This phenomenon not only occurs at high sterilization temperatures (UHT, Ultra-High Temperature, *i.e*. 120 to 150°C), but also at relatively low pasteurization temperatures (*i.e*. 70 to 95°C). In addition, also taste is being perceived as astringent and/or bitter.

There is therefore a need for a food composition comprising rapeseed protein that does not lead to any or all of the problems mentioned above. WO 2018/007508 A1 describes an emulsion comprising i) 15 to 75 wt.% of water; ii) 5 to 80 wt.% of vegetable oil; iii) 1.5 to 5 wt.% of an emulsifying agent comprising at least 20 wt.% of native rapeseed protein isolate comprising 40 to 65 wt.% cruciferins and 35 to 60 wt.% napins and having a solubility of at least 88% over a pH range from 3 to 10 at a temperature of 23 +/- 2 °C; iv) up to 15 wt.% of additives; wherein i) + ii) + iii) + iv) add up to 100% or less.

### Detailed description of the invention

In the context of the present invention, the term "astringency" refers to the dry, puckering mouth feel similar to that caused by tannins that are for example found in many fruits or by proteins, especially in an acidic environment. Food products with tannins (such as unripe fruits) or polyphenols (red wine, dark tea) are generally considered astringent.

Astringency of solutions comprising rapeseed protein is another problem for which solutions are sought.

The term "bitterness" as used herein refers to the most sensitive of tastes and is perceived by many to be unpleasant, sharp or disagreeable. Common bitter beverages include unsweetened coffee and cocoa, beer, bitters and tonic water.

The term "fullness" as used herein refers to the feeling of full, round body in the mouth. A soup with yeast extract has more "fullness" than without, the same counts for full fat yoghurt versus low fat yoghurt and an alcoholic beverage versus its non-alcoholic equivalent.

The term "liquorice" as used herein refers to a taste sensation/component present in the sweet root of *Glycyrrhiza glabra* or in stevia plant species.

The term "sweetness" as used herein refers to the basic taste most commonly perceived when eating foods rich in sugar.

The term "thickness" as used herein refers to firmness in the mouth and represents the force needed to push the product in between tongue and palate.

The term "modifying" refers to either increasing or decreasing depending on the aimed goal.

By the expression "a hydrocolloid" is to be understood a type of hydrocolloid. By the expression "a vegetable oil" is to be understood a type of vegetable oil or fat. By the expression "an emulsifier" is to be understood a type of emulsifier.

As used herein, all the percentages are by weight (wt%) of the total weight of the beverage unless expressed otherwise. All ratios expressed herein are on a weight/weight (w/w) basis unless expressed otherwise.

In a first aspect there is provided a composition comprising rapeseed protein, a hydrocolloid and a vegetable oil, wherein the amount of rapeseed protein relative to the total composition is from 0.5-10% (w/w), the total amount of hydrocolloid is from 0.02-1% (w/w), and vegetable oil is from 0.5-80% (w/w), wherein the weight ratio between oil and protein is at least 1:3. Preferably, the composition further comprises water. Such a composition can be a food with a high water level, up to 99% (98.98%) (wt) of water, such as beverages, neutral pH plant-protein-based milk equivalents, non-flavored or flavored, fermented plant-protein-based products such as yoghurt-equivalents or plant-based equivalents of fresh cheese / quarg / cottage cheese, ice cream, whipping creams, coffee creams, cooking creams, dressings and sauces, and low pH refreshing beverages and soft drinks.

The rapeseed used to obtain the rapeseed protein isolate as applied in the instant invention is usually of the varieties *Brassica napus* or *Brassica juncea.* These varieties contain low levels of erucic acid and glucosinolates, and are the source of canola, a generic term for rapeseed oil comprising less than 2% erucic acid and less than 30 mmol/g glucosinolates. The predominant storage proteins found in rapeseed are cruciferins and napins. Cruciferins are globulins and are the major storage protein in the seed. A cruciferin is composed of 6 subunits and has a total molecular weight of approximately 300 kDa. Napins are albumins and are low molecular weight storage proteins with a molecular weight of approximately 14 kDa. Napins are more easily solubilized and are primarily proposed for use in applications where solubility is key. Rapeseed proteins can also be divided into various fractions according to the corresponding sedimentation coefficient in Svedberg units (S). This coefficient indicates the speed of sedimentation of a macromolecule in a centrifugal field. For rapeseed proteins, the main reported fractions are 12S, 7S and 2S. Napin is a 2S albumin, and cruciferin is a 12S globulin. In the context of the present invention, the rapeseed protein isolate comprises from 15 to 65% (w/w) cruciferins and from 35 to 85% (w/w) napins, the total being equal to or less than 100%. In one embodiment the rapeseed protein isolate comprises from 40 to 65% (w/w) cruciferins and from 35 to 60% (w/w) napins, the total being equal to or less than 100% (w/w). Preferably, the rapeseed protein is native rapeseed protein isolate comprising 40 to 65% (w/w) cruciferins and 35 to 60% (w/w) napins, the sum of cruciferins and napins not exceeding 100% (w/w), wherein the native rapeseed protein isolate comprises at least 5% (on dry matter) 12S rapeseed protein where the presence of 12S is verified by Blue Native PAGE.

Advantageously, rapeseed protein is a natural and versatile protein source useful for many food applications, including beverages. In addition, rapeseed protein isolate has a sweetness making it suitable as a substitute for high-calorie sweeteners such as sucrose and the like. Interestingly, products made with rapeseed protein isolate, obtained for example as described in WO 2018/007492, are soluble at pH values ranging from pH 3 to 9.

In an embodiment, the composition further comprises an emulsifier. An emulsifier promotes formation and/or stability of emulsions. Suitable emulsifiers may be the ones known to the skilled person, for example phospholipids (*e.g*. lecithin and the like), or calcium, magnesium, potassium, or sodium salts of fatty acids, mono- and diglycerides (MDG) and derivatives thereof such as lactic acid esters ("Lactem") of MDG, acylated tartaric acid esters ("Datem") of MDG, sorbitan esters of monostearate (tweens and spans). Phospholipids are natural amphiphilic molecules found in the cell and organelle membranes of animal, plant, and microbial species. These phospholipids can be isolated, purified, and utilized as surface-active ingredients in the food industry, where they are typically referred to as lecithin. The lecithin used in the food industry is usually extracted from soybeans, egg yolk, milk, sunflower kernels, or rapeseeds. Lecithin ingredients are typically mixtures of different phospholipids, with the most common being phosphatidylcholine, phosphatidylethanolamine and phosphatidylinositol. Also fractions of lecithins or modified by chemical or enzymatic treatments can be used, such as partially hydrolyzed lecithins used in oil-in-water emulsions.

In an embodiment, the composition has a pH, when measured at 20±2°C, between 5.0 and 9.0, or between 6.5 and 8.0. The composition of the present invention does not form unwanted aggregates upon heating. This effect is notably pronounced in so-called neutral pH beverages, i.e. beverages in which the pH, when measured at 20±2°C, is from 5.0 to 9.0, or from 6.5 to 8.0. Formation of aggregates as determined by particle size analysis is negligible after heat treatment such as sterilization (at 144°C for 4 seconds) at pH values higher than 6.5, *i.e*. from 6.75 to 7.82. The same applies for pasteurization (at 90°C for 20 seconds).

It was found that instability associated with the production of emulsion-based beverages comprising rapeseed protein can be overcome by addition of hydrocolloids, optionally in combination with sufficient shear (such as high-pressure homogenization). Moreover, the instant invention demonstrates that by making an oil-in-water emulsion, rapeseed protein is more resistant to aggregation upon heating. Surprisingly, the composition of the instant invention in addition reduces the astringent mouthfeel of highly aqueous liquids containing plant proteins, in particular rapeseed protein. The combination of rapeseed protein, a vegetable oil and an emulsifier is known from WO 2018/007508 focusing at the preparation of food emulsions such as mayonnaise, however this document does not address the problem of instability and astringency in beverages.

The amount of rapeseed protein relative to the total composition is from 0.5-10% (w/w), or from 1.5-5% (w/w). The total amount of hydrocolloid (single ingredient or mixture of more than one) is from 0.02-1% (w/w), or from 0.2-0.5%. The amount of vegetable oil is from 0.5-80% (w/w), or from 0.6-30%, or from 1-5% (w/w). In one embodiment, the amount of vegetable oil is 0.5 to 15% (w/w). In yet another embodiment, the amount of emulsifier is from 0.05-0.5% (w/w) or from 0.1-0.3% (w/w).

The weight ratio between oil and protein is at least 1:3. For example, the weight ratio between oil and protein may be 2:3, 1:1 or 3:1 or the like.

Use of hydrocolloids in beverages is known. For example, WO 2010/057024 describes the addition of hydrocolloids having an intrinsic viscosity of 5 to 600 mL/g (capillary flow viscosity) to improve flavor and mouthfeel, however there is no mention or suggestion of an effect related to prevention of the formation of aggregates upon heating of protein solutions or suspensions.

Hydrocolloids are a diverse group of long chain polymers characterized by their property of forming viscous dispersions and/or gels when dispersed in water. In the context of the invention, suitable hydrocolloids are galactomannans (guar gum, locust bean gum and tara gum), gellan (including low or high acyl gellan), xanthan, pectins, alginates, carrageenans, gum Arabic, cellulose derivatives such as carboxymethyl cellulose, hydroxypropylmethyl cellulose, methyl cellulose, native and modified starches and the like.

Also, combinations of several hydrocolloids, like carboxymethyl cellulose and high acyl gellan, may be employed. In one embodiment, the hydrocolloid is gellan gum and/or carboxymethyl cellulose and/or alginate and/or locust bean gum and/or pectin and/or guar gum and/or wherein said emulsifier is lecithin. Preferably, the gellan gum is high acyl gellan gum, low acyl gellan gum or a combination thereof. Hydrocolloids may be classified in a group of hydrocolloids that have a thickening effect, for example suitable for mouthfeel and texture, and hydrocolloids that give colloidal stability.

Addition of oil phases for the preparation of beverage emulsions are known. In WO 2007/066233, these oil-in-water emulsions are based on an oil phase, an aqueous phase and pectin, and they were reported to show enhanced emulsifying properties and stability. However, only certain types of beverages can be prepared from such oil-in-water emulsions and no information on the sensory properties or on the effects related to prevention of the formation of aggregates upon heating is provided. In the context of the invention, suitable oils are vegetable oils like coconut oil, corn oil, olive oil, palm oil, palm kernel oil, rapeseed oil, soya bean oil, sunflower oil and the like.

Due to the emulsifying properties of certain hydrocolloids (*e.g*. gum Arabic is used as a food emulsifier), the concept of hydrocolloids and emulsifiers may have overlap. Hydrocolloids as emulsifiers may be differentiated from the other commonly used emulsifiers, in that the former are macromolecular while the latter are, usually, smaller molecular with molecular weights seldom exceeding 1000 g/mol.

In an embodiment, the composition may further comprise sweetening agents and/or flavoring agents and/or coloring agents and/or calcium salts. Advantageously, the amount of added sweetening agents may be relatively low, or even zero, resulting from the phenomenon that rapeseed protein has a sweet taste. Calcium salts, such as for example calcium phosphate, have the advantage that the nutritional value of dairy milk can be mimicked, advantageously without negative effects such as a decrease in protein solubility.

In another embodiment, the amount of water in the composition of the present invention is almost zero, *i.e*. from 0.001-1% (w/w), or from 0.01-0.1% (w/w). Such compositions may be prepared by known drying techniques such as spray-drying or lyophilization and the like. Advantageously, compositions with low water content are easy to handle and/or cheap to transport. The dried composition can then be further employed in other food products such as powder meal replacement products, that can be consumed after redispersion of the powdered mix into water.

Surprisingly, the composition of the present invention not only resolves the issue of unwanted formation of aggregates after heating, but also resulted in unexpected changes in sensory attributes of the rapeseed protein. Compared to a reference solution of rapeseed protein isolate in water, it was found that the compositions of the present invention further comprising a hydrocolloid, a vegetable oil, and optionally an emulsifier displayed improved sensory characteristics. Notably, astringency associated with rapeseed is reduced in the composition of the present invention. Besides the flavor attributes, the mouthfeel also improved for fullness, thickness, and creaminess. In addition, subsequent heat treatment improved the mentioned mouthfeel characteristics. This effect appeared slightly more pronounced for longer heating at 90°C (pasteurization) than it was for shorter heating at 144°C (sterilization).

Different aspects of sensory and/or mouth feel of a beverage comprising rapeseed protein can be influenced using the composition and/or method of the present invention.

Advantageously, the composition and/or method of the invention relates to modifying sensory attributes such as astringency, bitterness, creaminess, fullness, liquorice, sweetness, and/or thickness of a beverage comprising rapeseed protein by emulsification and optionally heating. Preferably, the composition and/or method of the invention enables modification of at least one of the mentioned sensory properties.

To quantify astringency, samples are compared by a trained sensory panel to a blank (rapeseed protein isolate solution in water) by means of Quantitative Descriptive Analysis (QDA). The panel consists of from 10 to 14 members (such as 12, 13, or 14 members), and may evaluate the products also on other attributes, in addition to astringency. During the test the samples are offered according to an optimally balanced design and are scored on 0-100 unstructured line scales in EyeQuestion in duplicate. The products may be given one-by-one to the panelists and are served at 20±2°C. In an embodiment, products are presented in white polystyrene cups with a white polystyrene spoon to prevent sedimentation during tasting. During the training of the panel, astringency is defined by and related to the reference green tea.

In one embodiment, the composition is a food product such as a beverage comprising rapeseed protein, a hydrocolloid, a vegetable oil, and optionally an emulsifier. The beverage may be in the form of a concentrate, a powder, or a liquid beverage, such as a ready-to-drink beverage. In an embodiment, the composition is used such that the rapeseed protein is present in the beverage in an amount of about 0.5 to 10% (w/w), 1 to 8% (w/w), 1.5 to 5% (w/w), or 2 to 5% (w/w) by weight of the beverage. In a further embodiment, the beverage comprises oil or fat in an amount up to 6.0% (w/w), or about 2.0 to 5.0% (w/w) by weight of the beverage. In a further embodiment, the beverage comprises sugars in an amount of from about 0.5 to 10% (w/w) by weight of the beverage, or alternative sweeteners such as aspartame, sucralose, sugar alcohols, steviol glycosides and the like. In a further embodiment, the beverage is a shelf-stable ready-to-drink beverage that is stable for at least nine months at 20±2°C.

In another embodiment, the composition is a beverage comprising rapeseed protein, a hydrocolloid, a vegetable oil, and optionally an emulsifier and further comprising another plant material. Examples are so-called plant-based milks which can be made from a plant source by dispersing seeds, grains or nuts into an aqueous phase, optionally removing part of the fibers and cell debris by filtration or centrifugation. Such plant materials may be derived from a variety of legumes and pulses such as soybean, pea, chickpea, fava bean, lentil, mung bean, peanut, lupin; oil seeds/cabbages such as rapeseed or canola, camelina, sesame, sunflower; cereals and pseudo cereals, such as wheat, barley, oat, rice, sorghum, quinoa, buckwheat; nuts, such as almond, hazelnut, walnut, cashew; coconut; nightshades such as potato. Further ingredients such as sweeteners, flavors and minerals (such as tricalcium phosphate to obtain a calcium level comparable to dairy milk, in a range of from 0.05 to 0.5% (w/w)) may be added. Such beverages need to undergo thermal treatment for microbiological stability, such as 90-95°C for 20 seconds or Ultra-High Temperature (144°C for 3-6 seconds). Many plant-based milks are relatively low in protein content, and therefore the composition of the instant invention fulfills the need to enrich such beverages with additional protein, to arrive at a nutritional value that is better comparable to dairy milk.

In a further embodiment, the composition with reduced astringency according to the invention can be a food product at a pH of 2-9, more preferably 3.5-5 and 6.5-8, such as a low pH refreshing beverage or sour cream equivalent or a fresh cheese equivalent, or sauces and dressings.

A further embodiment is wherein the composition of the invention is a stable rapeseed protein-enriched plant-based beverage that is low in astringency. This can, for instance, be a rapeseed protein-enriched almond milk, a rapeseed protein-enriched oat milk, a rapeseed protein-enriched rice milk, a rapeseed protein-enriched coconut milk, or a rapeseed protein-enriched nut milk such as a cashew nut milk. The vegetable oil phase of such a product can (at least partly) be the lipid or lipids present in the nut, grain or seed itself, optionally supplemented with another oil, preferably from vegetable origin.

In a second aspect, the invention provides a method for the preparation of a composition comprising rapeseed protein, a hydrocolloid, a vegetable oil, and water comprising the steps of:
a) Preparing an aqueous solution comprising rapeseed protein,
b) Preparing an aqueous solution comprising a hydrocolloid,
c1) Mixing a vegetable oil and the solution obtained in step a), followed by addition of the mixture obtained in step b), or
c2) Mixing the solutions obtained in steps a) and b), followed by addition of a vegetable oil,
d) Emulsifying the mixture obtained in steps c1) or c2).

Suitable hydrocolloids are galactomannans (guar gum, locust bean gum and tara gum), gellan (including low or high acyl gellan), xanthan, pectins, alginates, carrageenans, gum Arabic, cellulose derivatives such as carboxymethyl cellulose, hydroxypropylmethyl cellulose, methyl cellulose, native and modified starches and the like. Also, combinations of several hydrocolloids, like carboxymethyl cellulose and high acyl gellan, may be employed.

In an embodiment, the composition further comprises an oil or fat. The oil can be of vegetable, algal, or animal origin. Suitable vegetable oils are canola oil, coconut oil, corn oil, olive oil, palm oil, palm kernel oil, peanut oil, rapeseed oil, rice bran oil, sesame oil, soy bean oil, sunflower oil and the like or mixtures thereof. An oil may also comprise oil from algae. An oil or fat may also be milk fat.

Emulsification may be carried out with a high shear mixer or a homogenizer, or alternative equipment and methods known to the skilled person.

In an embodiment, an emulsifier may be added before, after or during steps c1) or c2). An emulsifier may facilitate emulsion formation and/or stabilize an emulsion. Suitable emulsifiers may be proteins and phospholipids (*e.g*. lecithin and the like), or calcium, magnesium, potassium, or sodium salts of fatty acids.

In an embodiment, the oil droplet diameter (D50) of the composition of this invention is below 200 µm, such as from 1 to 100 µm or from 2 to 50 µm, or from 3 to 20 µm, before heat treatment is applied.

In an embodiment, a calcium salt may be added during any one of steps a), b), c1), c2) or d) of the method of the second aspect. Calcium ions may mimic the nutritional value of dairy products like milk. One possible source of calcium ions is tricalcium phosphate or calcium carbonate.

In industrial processes the high-shear dispersion step often follows the heating step. In an embodiment of the invention it is advantageous to pre-shear the emulsion of the invention. Thus, according to the invention, a fine emulsion may be made by applying sufficient shear by processes known in the art. The average droplet size of the oil droplets (D50) should be below 50 µm, more preferably below 25 µm, before the heat treatment is applied. After the heating step, another high-shear step may be executed.

In a third aspect, the invention provides use of the composition of the first aspect in the preparation of a beverage. In an embodiment said preparation of a beverage comprises pasteurization and/or sterilization, *i.e*. treatment at a temperature of from 70°C to 150°C for 2 seconds to 5 minutes following addition of said composition to said beverage.

In another embodiment the use may be for the preparation of a plant-protein fortified beverage. Suitable examples are clean label *e.g*. so-called functional beverages such as protein waters, low in calories, high in protein and without sugar, or beverages such as almond milk. Currently these beverages are mainly whey-based rather than plant-based. Lack of astringency, as achieved by the composition of the instant invention, is key for such clear water-like beverages.

In a fourth aspect, the invention provides a beverage comprising the composition of the first aspect of the invention. Non-limiting examples of such beverages are protein waters or protein-enforced beverages such as protein-enforced almond milk. In an embodiment the beverage is packaged in a container which may be a can or a bottle or the like, made from paper, glass, aluminum, a plastic and the like. Ideally the package has a volume that can hold beverage volumes that are normally supplied to consumers, *i.e*. from 0.2 to 2.5 L, for example 0.25 L, 0.3 L, 0.33 L, 0.5 L, 0.7 L, 0.75 L, 1 L or 1.5 L.

### EXAMPLES

### Materials

Rapeseed protein isolate was prepared from cold-pressed rapeseed oil seed meal as described in WO 2018/007492; the protein content was 90% (w/w). The resultant rapeseed protein isolate comprised in the range of from 40 to 65% (w/w) cruciferins and 35 to 60% (w/w) napins, contained less than 0.26% (w/w) phytate and had a solubility of at least 88% when measured over a pH range from 3 to 10 at a temperature of 23±2°C.

Carboxymethyl cellulose (AMD 254) was from DuPont, high acyl gellan gum (ND102) and low acyl gellan gum (Gellan WJ) was from DSM Hydrocolloids, Tongxiang, China), sodium alginate from the Modernist Pantry, Maine, USA, LM-pectin (APC310FB), from DSM Hydrocolloids, Tongxiang, China, locust bean gum (LBG, Modernist Pantry, Maine, USA). Sodium chloride was from Merck, tricalcium phosphate tribasic from Sigma Aldrich, sunflower oil was from Albert Heijn (the Netherlands). Sunflower lecithin was from Piping Rock (USA) or (Solec Z) from Unimills (Zwijndrecht, the Netherlands). Unless stated otherwise, all other chemicals were from Merck. High shear mixer was from Silverson, Monowave from Anton Paar (Oosterhout, the Netherlands), Thermomixer from Vorwerk (Switzerland), Homogenizer (M110D) from Microfluidics, Particle sizer (LS13320) from Beckmann Coulter)

### Test methods

### Measurement of pH

pH measurements were carried out at 20±2°C, unless otherwise mentioned, using a Radiometer model PHM220 pH meter equipped with a PHC3085-8 Calomel Combined pH electrode (D=5MM).

### Example 1

### Preparation of rapeseed protein emulsions

### Rapeseed protein isolate solution:

Rapeseed protein isolate (4.44 g) was weighed into a 500 mL beaker and filled up to 100 g with tap water. The solution was stirred with a stirring bar for at least 30 minutes at 20±2°C to reach the optimum hydration of the protein.

### Hydrocolloid solution:

Carboxymethyl cellulose (3 g) and high acyl gellan (0.3 g) were weighed into a beaker and filled up to 75 g with tap water. To avoid poor wettability, water may be added first to the carboxymethyl cellulose. The solution was stirred for at least 30 minutes at 20±2°C to reach the optimum hydration. Subsequently, the glass beaker was placed in a water bath of 87±2°C for 10 min while the mixture was stirred. After cooling to 40±2°C the mixture was used in the preparation of the rapeseed protein emulsion below.

### Rapeseed protein emulsion:

Sunflower oil (1.8 g), sunflower lecithin (0.2 g), tricalcium phosphate (0.04 g), and the rapeseed protein isolate solution described above (87.96 g) were weighed into a 300 mL glass beaker. Subsequently, the hydrocolloid solution described above (10 g) was added. This was emulsified by vigorously mixing at maximum speed for 1.5 minutes using a high shear mixer (Silverson). After mixing, the pH was adjusted with aqueous hydrochloric acid (0.5 M) or aqueous sodium hydroxide (0.5 M) to a pH range of 6.75, or to the required pH. Corrected for the protein content of the rapeseed protein isolate, the resulting emulsion contained 3.5% (w/w) of rapeseed protein, 0.4% (w/w) of carboxymethyl cellulose, 0.04% (w/w) of high acyl gellan, 1.8% (w/w) of sunflower oil, and 0.2% (w/w) of sunflower lecithin.

### Comparative Example 1

### Thermal treatment of rapeseed protein isolate solution

Rapeseed protein isolate solution (20 mL) was filled into a 30 mL wide neck tube and sealed with a fitting lid (both Monowave accessories, Anton Paar) with a stirring bar, and heated whilst stirring in the desirable conditions using a Monowave instrument:
a. Low pasteurization: 72°C, 20 sec, 1200 rpm; cool down to 45°C
b. High pasteurization: 90°C, 20 sec, 1200 rpm; cool down to 45°C
c. Ultra-High Temperature: 144°C, 4 sec. 1200 rpm; cool down to 45°C

In a first set of experiments the soluble protein content was measured by Dumas measurement of the supernatant, the results given in the Table below show that upon increasing heat load at pH 7 more protein falls out of solution.

**Table: Remaining soluble protein after heat treatment at pH 4 or pH 7**

| Heat regime | pH 4 | pH 7.0 |
|---|---|---|
| Room temperature | 90.1% | 73.9% |
| 72°C, 20 sec | 88.3% | 68.9% |
| 90°C, 20 sec | 87.9% | 44.8% |
| 144°C, 4 sec | 95.6% | 47.7% |

In a second test, tricalcium phosphate was added to the neutral pH protein solution, to a total of 0.04 g tricalcium phosphate/100 mL of product to mimic the nutritional value of dairy milk. Protein solubility did not improve. The mixture was colloidally instable as seen by rapid aggregation and sedimentation of the solids upon heating.

### Comparative Example 2

### Aggregation of plant proteins upon thermal treatment

Suspensions (20 mL, 3.5% w/w) of pea protein, rapeseed protein, rice protein, soy protein, and whey protein in water at pH 7 were treated under pasteurization conditions (90°C, 20 sec) and aggregate formation was monitored visually. The rapeseed protein suspension showed formation of aggregates (*i.e*. larger particles) that were significantly coarser compared to the other proteins. In the case of rapeseed protein, the aggregates were visible. The experiment was repeated under Ultra-High Temperature conditions (144°C, 4 sec) in which case pea protein, rice protein and whey protein showed minor aggregate formation whereas rapeseed protein showed significant aggregate formation, to the extend even that a clear layer was obtained between sedimented and floating aggregates.

### Example 2

### Thermal treatment of rapeseed protein emulsion

As the tests in Comparative Example 1 show obvious colloidal instability, hydrocolloids were added to the mixtures and heated as indicated. Two combinations of carboxymethyl cellulose and high acyl gellan gum were used, concentrations of carboxymethyl cellulose and gellan were 0.4 and 0.04% (w/w) and 0.2 and 0.02% (w/w), respectively.

Whilst the higher concentration of 0.4% (w/w) carboxymethyl cellulose and 0.04% (w/w) gellan was more colloidally stable (less severe sedimentation and aggregation upon heating), still that was not fully sufficient. In a next step, also vegetable oil plus emulsifier was added to the mixture which was thoroughly sheared using a Silverson High sheer mixer resulting in an emulsion with constituents as per the below Table. This emulsion was now heat treated to 90 or 144°C as indicated above, resulting in stable emulsions that were homogeneous and did not display any aggregates.

**Table: Composition of rapeseed protein emulsion**

| Component | % (w/w) |
|---|---|
| Rapeseed protein isolate | 3.5 |
| Sunflower oil | 1.8 |
| Sunflower lecithin | 0.2 |
| Carboxymethyl cellulose | 0.4 |
| High acyl gellan gum | 0.04 |
| Tricalcium phosphate | 0.04 |
| Water | 94.3 |
| Total | 100 |

### Example 3

### Impact of pH on stability of rapeseed protein emulsion

Emulsions with compositions as outline in the Table of Example 2 were made as described in Example 1. The pH was carefully adjusted before the heat treatment in a range of 5.68-7.76. These emulsions were subjected to the heat treatments at 90°C (pasteurization) and 144°C (sterilization) separately (see Example 2 for details). After heat treatment the pH was measured again, and the particle size distribution was measured using laser light scattering (Beckmann Coulter LS13320). Results are given in the Table below, demonstrating that the pH increases after heat treatment, and also that the particles (droplets in protein flocs) are small after sterilization when the pH is above 6.5, before heat treatment. When the pH is below 6.5 before heat treatment, substantial aggregation has taken place.

**Table: Particle size following pasteurization or sterilization at various pH values**

| pH | | | Particle size (median; µm) | |
|---|---|---|---|---|
| Start | Pasteurization | Sterilization | Pasteurization | Sterilization |
| 5.68 | 5.88 | 6.62 | Not measurable | Not measurable |
| 6.15 | 6.32 | 6.46 | 92.5 | Not measurable |
| 6.43 | 6.6 | 6.55 | 93.9 | Not measurable |
| 7.13 | 7.24 | 7.36 | 56.2 | 6.4 |
| 6.75 | 7.01 | 7.16 | 8.3 | 8.3 |
| 7.76 | 7.82 | 7.82 | 22.7 | 9.2 |

### Example 4

### Sensory assessment of rapeseed protein emulsion

Emulsions comprising rapeseed protein were prepared as described in Example 1 and subjected to various heat treatments.

The following samples were prepared:

| | |
|---|---|
| Sample 1: | Rapeseed protein isolate (3.5% w/w) in water |
| Sample 2: | Rapeseed protein (3.5% w/w) emulsion according to Example 1 |
| Sample 3: | Sample 2 treated at 90°C for 20 seconds |
| Sample 4: | Sample 2 treated at 144°C for 4 seconds |

Samples were compared by a trained sensory panel to a reference rapeseed protein isolate solution in water. The samples were evaluated by means of Quantitative Descriptive Analysis (QDA) with a sensory panel (n=13) on attributes relevant for the product in the test. During the test the samples were offered according to an optimally balanced design and were scored on 0-100 unstructured line scales in EyeQuestion in duplicate. The products were given one-by-one to the panelists and served at 20±2°C. The products were presented in a white polystyrene cups with a white polystyrene spoon to prevent sedimentation during tasting.

Data were analyzed using EyeOpenR. Statistically significant product differences were computed by means of ANOVA (Analysis of Variance) for each attribute. If a statistically significant product difference occurred, a Multiple Comparison Analysis (Fisher LSD) was computed to investigate which products differed from each other, the mean product score for an attribute followed by different letters are statistically different (p<0.05). For results see the below Table.

The results showed for quite some attributes a statistically significant difference between the samples. Consequently, the emulsification method of the invention provides a tool to adapt sensory aspects of rapeseed protein isolates as may be required depending on specific applications. Changes in sensory aspects were notably pronounced for mouthfeel attributes like fullness, astringency, thickness and creaminess, for flavor attributes like intensity, sweetness, bitterness, creaminess and liquorice, and for aftertaste attributes like intensity, bitterness and astringency.

**Table: Results of ANOVA with Fisher's LSD (only applicable if a statistical product difference exits) Abbreviations: af = after-feel; at = aftertaste; fl = flavor; mf = mouthfeel; od = odor**

| Attribute | Sample 1 | | Sample 2 | | Sample 3 | | Sample 4 | | p-Value |
|---|---|---|---|---|---|---|---|---|---|
| Intensity-od | 27 | | 25 | | 26 | | 28 | | 0.56 |
| Sweet-od | 16 | | 14 | | 15 | | 14 | | 0.48 |
| Nutty-od | 15 | | 17 | | 20 | | 19 | | 0.34 |
| Grain-od | 23 | | 23 | | 25 | | 32 | | 0.09 |
| Paper-od | 19 | b | 19 | b | 20 | b | 27 | a | * |
| Off odor-od | 10 | | 11 | | 11 | | 8 | | 0.30 |
| Powdery/chalk-mf | 23 | | 28 | | 34 | | 34 | | 0.07 |
| Fullness-mf | 24 | c | 37 | b | 49 | a | 42 | ab | *** |
| Astringent-mf | 51 | a | 27 | b | 31 | b | 35 | b | *** |
| Thick-mf | 10 | c | 25 | b | 43 | a | 35 | ab | *** |
| Creamy-mf | 6 | c | 32 | b | 43 | a | 35 | ab | *** |
| Intensity-fl | 58 | a | 46 | b | 45 | b | 43 | b | *** |
| Sweet-fl | 38 | a | 19 | b | 15 | b | 15 | b | *** |
| Bitter-fl | 37 | a | 21 | b | 28 | ab | 27 | b | ** |
| Nutty-fl | 20 | | 25 | | 28 | | 26 | | 0.16 |
| Grain-fl | 25 | | 37 | | 34 | | 36 | | 0.05 |
| Bean-fl | 25 | | 30 | | 30 | | 30 | | 0.66 |
| Paper-fl | 19 | c | 25 | b | 29 | ab | 32 | a | *** |
| Cream-fl | 5 | b | 25 | a | 24 | a | 21 | a | *** |
| Liquorice-fl | 48 | a | 17 | b | 16 | b | 11 | b | *** |
| Off flavor | 9 | | 8 | | 14 | | 13 | | 0.09 |
| Intensity-at | 53 | a | 37 | b | 39 | b | 40 | b | *** |
| Bitter-at | 37 | a | 24 | b | 24 | b | 28 | ab | * |
| Astringent-af | 54 | a | 31 | b | 35 | b | 37 | b | *** |
| Mouthcoating-af | 19 | | 26 | | 28 | | 25 | | 0.08 |

| | | | | | | | | | |
|---|---|---|---|---|---|---|---|---|---|
| * p<0.05 ** p<0.01 *** p<0.001 | | | | | | | | | |

### Example 5

### Determination of lower bound oil to protein ratio

Emulsions comprising rapeseed protein were prepared as follows. A solution comprising rapeseed protein isolate (44.4 g filled up to 1000 g with water), was stirred for 30 min. Separately, a hydrocolloid solution was made (6 g of carboxymethyl cellulose and 0.6 g of high acyl gellan gum filled up with tap water to 150 g) and heated up at 87°C. An emulsion was made by combining varying amounts of oil and lecithin (see table below), 0.04 g of tricalcium phosphate, 87.9 g of the protein solution and 10 g of hydrocolloid solution. This mixture was sheared by a Silverson high-shear mixer (1.5 minute at maximum speed). Thereafter the pH was adjusted to 7 using a sodium hydroxide solution. Mixtures were heat-treated to 144°C for 4 seconds, according to Example 1. The products were scored visually on their macroscopic stability, and by light scattering to obtain a particle size distribution. An internal panel of 6 persons scored the products on astringency The samples as per the below Tables were prepared, all with a protein content of about 3.3%, 0.6% carboxymethyl cellulose, and 0.06% gellan gum. Sample 5 is the reference comparable to what was tested in the previous experiments.

**Table: Oil level of tested samples, their perceived astringency and qualitative emulsion stability.**

| **Sample** | **Oil** | **Lecithin** | **Total oil** | **Astringency** | **Emulsion stability after heat** |
|---|---|---|---|---|---|
| 1 | 0 | 0 | 0 | High | No emulsions |
| 2 | 0.45 | 0.05 | 0.5 | Present | Unstable |
| 3 | 0.90 | 0.10 | 1 | A bit | Unstable |
| 4 | 1.35 | 0.15 | 1.5 | Not | Nearly stable |
| 5 (reference) | 1.80 | 0.20 | 2 | Not | Stable |
| 6 | 4.10 | 0.20 | 4.3 | Not | Stable |
| 7 | 6.40 | 0.20 | 6.6 | Not | Stable |

**Table: Oil droplet sizes (µm) of tested samples.**

| **Sample** | **Total oil (%)** | **D10** | **D50** | **D90** |
|---|---|---|---|---|
| 1 | 0 | 51.5 | 354 | 707 |
| 2 | 0.5 | 172 | 427 | 735 |
| 3 | 1 | 154 | 395 | 647 |
| 4 | 1.5 | 78.0 | 332 | 623 |
| 5 (reference) | 2 | 1.65 | 64.8 | 251 |
| 6 | 4.3 | 0.95 | 7.39 | 179 |
| 7 | 6.6 | 2.34 | 6.26 | 14.1 |

### Example 6

### Sensory assessment of spray-dried and resuspended rapeseed protein emulsion

An emulsion comprising 3.3% rapeseed protein isolate and oil (1.8% w/w) and lecithin (0.2% w/w) was prepared as described in Example 4, maltodextrin (9.12%, DE12, spray-drying aid), and spray dried on a lab spray drier. In a similar way a 3.3% protein solution (no emulsion, without oil) with additional maltodextrin (9.12% DE12) was spray dried. These spray-dried products were resuspended in water and compared to a freshly prepared emulsion (3.3% protein, 2% oil, no maltodextrin) by an internal panel of 6 persons for their astringency. The spray-dried product had the same (low) astringency score as the reference emulsion, and the spray-dried protein solution scored as high on astringency as commonly is found for CanolaPRO solutions.

Therefore, it can be concluded that with spray-drying the emulsion remains low in astringency.

### Example 7

### Sensory assessment of rapeseed protein emulsion at low pH

Emulsions comprising rapeseed protein were prepared as described in Example 5, however at low pH, in two ways: A: first the emulsion was made and then the pH was adjusted to 4, B: First the protein solution was adjusted to pH 4, then the emulsion was made, thereafter the pH was readjusted again. Emulsions were heat treated as per Example 1. These emulsions were assessed by an internal panel of 6 persons for their astringency and compared to a protein solution of 3.3% at pH 4, and the reference emulsion of pH 7 as described in Example 5. The low pH emulsions were more astringent than the reference (pH 7) emulsion, but not as astringent as a protein-only solution at low pH. No difference was found for astringency of both low-pH emulsions.

### Example 8

### Almond milk beverage enriched with rapeseed protein isolate

An almond milk beverage enriched with rapeseed protein isolate was made as follows.

### Almond dispersion (around 1200 q):

100 g blanched almonds were weighed in a 1L-bottle and filled up to 1000 g with tap water. In total 200 g blanched almonds were divided over two bottles and soaked for about 18 hours, at 4°C. The soaking water was removed from the almonds, almonds were weighed and blended with fresh water. Per 100 g of almonds 500 g of water was added. The almonds were grinded in a Chufamix veggie drinks maker with a blender for about 2 min, per 100 g soaked almonds.

### Protein solution (1100 q):

43 g Rapeseed protein isolate was weighted in a 2L beaker and 313 g tap water, 747 g almond dispersion, 0.49 g tricalcium phosphate and 1.19 g salt were added. Part of the water was first added to the protein powder to create a paste to improve wettability. The solution was stirred with a magnetic stirring rod for at least 30 min at room temperature to reach the optimum protein hydration.

### Hydrocolloid mixture (0.4% carboxymethyl cellulose/0.04% qellan; 100 q):

8.17 g carboxymethyl cellulose, 0.82 g high acyl gellan and 91 g tap water were weighted. To avoid poor wettability, water was first only added to the carboxymethyl cellulose. When the carboxymethylcellulose was fully dissolved, gellan was added. The solution was stirred with a stirring rod for at least 30 min at room temperature to reach the optimum hydration of the hydrocolloids. The glass beaker was placed in a water bath at 87°C for 10 min and stirred regularly. The mixture was cooled down to 40°C before being added to the protein solutions.

### Rapeseed protein-enriched almond milk (1000 q):

1.0 g of sunflower lecithin was poured into a plastic beaker and dissolved in 10.0 g of sunflower oil. 940g of protein solution and 49g of hydrocolloid mixture were added. The blend was mixed vigorously at maximum speed with the Silverson for 1.5 min. The pH was measured and adjusted from around 7.0 to 7.3 with a 4M NaOH solution.

### Heat treatment:

The Thermomix beaker was heated with water in advance to decrease heating time with the almond drink. The almond drink was kept at 90°C for 20 seconds at 1.5 rotation speed (Thermomix value), having a total heating time of about 3 min.

This resulted in an almond milk beverage containing 3.4 wt% protein (3.2% from rapeseed protein isolate and 0.3% from almonds) and 4.4 wt% oil (3.4 % from almonds and 1 % from the extra added sunflower oil). This experimental product was tested by a trained sensory panel as described in Example 4 and compared to a commercial almond milk containing 1.3 wt% oil and 0.5 wt% protein. No significant differences were found between these products on the attributes astringency (mouthfeel and aftertaste), bitterness (mouthfeel and aftertaste), and off odor and off flavor. This proves that the method described by this invention can lead to commercially relevant plant-based milk equivalent beverages with nutritional values (in terms of protein level) comparable to dairy milk, that are not met by current commercial products.

### Example 9

### Ultra-High Temperature-treated almond milk beverage

An Ultra-High Temperature-treated almond milk fortified with rapeseed protein isolate was made on a pilot plant scale, similar to the lab scale product in Example 8. A 40L premix was made with the composition outlined in the below Table.

**Table: Final composition almond drink fortified with rapeseed protein isolate**

| Ingredient | % (w/w) |
|---|---|
| Tap water | 90.76 |
| Almond; raw peeled; De Zuid-molen, the Netherlands | 4.38 |
| Rapeseed protein isolate | 3.20 |
| Sunflower oil | 1.00 |
| Carboxymethyl cellulose | 0.40 |
| Sunflower lecithin | 0.10 |
| Sodium chloride | 0.08 |
| Gellan; High acyl | 0.04 |
| Tricalcium phosphate tribasic | 0.04 |

6.5 kg raw almonds were soaked in 27 kg water for one hour. The water was drained, 32.5 kg of fresh water was added to the soaked almonds and these were milled by a vacuum cook-cutter (K64AC8, Seydelmann) at 5000 rpm for 45 seconds, and subsequently filtered over a 0.5 mm shaking filter (Russell finex 22), yielding an almond base. To make a protein base (1), 27.3 kg of that base was further diluted with 4.2 kg water, and 1.43 kg rapeseed protein isolate, 36 g sodium chloride and 184 tricalcium phosphate were added. This mixture was thoroughly sheared using a Silverson high-shear batch mixer (standard emulsor head and screen) and further stirred in a mixing tank for at least 30 minutes. Next to that, a hydrocolloid solution (2) was prepared by combining 178 g CMC powder and 17.8 g gellan into 10.8 kg water at room temperature, allowed to mix for at least 30 minutes and then heated to 87°C in a water bath under stirring, and allowed to cool back to 40°C. The oil phase (3) was made by dissolving 57 g lecithin into 565 g sunflower oil at room temperature. To prepare the final premix, 29.6 kg of protein base (1), 9.95 kg of hydrocolloid solution (2) and 440 g of oil phase (3) were mixed and thoroughly sheared using a micro-cutter shear device, and the pH was set to around 7.9 by sodium hydroxide solution. This premix was sterilized using a multipurpose Ultra-High Temperature heating system (APV, SPP) with direct steam injection (144°C, 3 seconds), flash-cooled to 80°C and homogenized by a two-stage high-pressure homogenizer (150/50 bar) at 60°C and filled in plastic bottles. This gave smooth and fairly low viscous drinks with a good taste.

The particle size distribution (PSD) was measured on a Malvern Mastersizer 2000 using the general purpose (spherical) Mie model. The PSD of the premix showed two peaks: first peak around 6 µm corresponding to the single protein-coated oil droplet, and a second peak of around 200 µm reflecting flocculated protein-coated oil droplets. The final product after production showed three peaks, with top peak sizes of 0.2, 4.0 and 95 µm respectively. The small first peak represented small aggregated protein clusters without oil droplets, the second peak showed the single protein-coated oil droplet, and last peak reflected flocculated protein-coated oil droplets.

The dry matter content of the final product was 6.14 % (w/w), measured using a Mettler Toledo drying balance.

### Example 10

### Effect of emulsifier

The impact of lecithin was illustrated by comparing the same base composition (see example with and without lecithin (10% on oil phase). Standard drinks were produced similarly to what was described above, the compositions are given in the Table below.

First the a solution with 7% rapeseed protein isolate, 0.16% NaCl, 0.66% tricalcium phosphate (corresponding toe 120 mg Ca per 100 mL final product) was prepared: 140 g rapeseed protein isolate + 1844 g tap water + 3.2 g sodium chloride + 13.2 g tricalcium phosphate, were combined and stirred for minimal 30 min. Next, the hydrocolloid solution (0.82% CMC and 0.082% high acyl-gellan) was prepared: 12.3 g CMC + 1.23 g high acyl-gellan 1496.5 g tap water were combined, stirred for 30 min, heated to 87°C in a water bath, and cooled down to room temperature. For one sample the oil and lecithin were mixed until all lecithin was dissolved in the oil. These three streams were combined and mixed for 1 min with a Silverson high-shear mixer at maximum speed. The pH was adjusted to 7.3 by a NaOH solution. Subsequently, the samples were heated under mild stirring to 90°C in a Thermomix mixer, held for 20 seconds at 90°C and then filled in glass bottles, and cooled in cold water, frequently shaking bottles during cooling. Finally the samples were homogenized by a high-pressure homogenizer (Panda 2K, GEA) at a total pressure of 230 bar, cooled to 10°C.

**Table: With and without lecithin: composition of samples in wt %**

| | With lecithin | No lecithin |
|---|---|---|
| Rapeseed protein isolate | 3.5 | 3.5 |
| Sodium chloride | 0.08 | 0.08 |
| Tricalcium phosphate | 0.33 | 0.33 |
| High acyl-gellan | 0.04 | 0.04 |
| CMC | 0.4 | 0.4 |
| Sunflower oil | 1.8 | 2 |
| Sunflower lecithin | 0.2 | |

The products showed equal stability upon storage for 1 week: no phase separation was observed. By light scattering the products had nearly the same average particle size diameter after one week (40-50µm), indicative for aggregated protein-covered oil droplets. The samples had the same appearance by light microscopy, no visual difference in oil droplet sizes were observed. It was concluded that lecithin is not strictly needed for this specific type of drinks.

### Example 11

### Emulsion-based drinks with various hydrocolloid systems

In the way as described in the previous example, protein-based drinks were made varying the hydrocolloid combination as is shown in the Table below. The list includes a variant without hydrocolloids, and the same standard reference as in the previous example, the reference product without oil, and variants with different hydrocolloids. Preparation was as described in the previous example.

**Table: Composition (in wt%) of emulsion-based drinks with various hydrocolloid systems**

| | Emulsion no hydrocolloids | Standard CMC + gellan | Standard CMC + gellan, no oil | Sodium alginate, no gellan | Sodium alginate + gellan | Sodium alginate + locust bean gum | Pectin + gellan |
|---|---|---|---|---|---|---|---|
| Rapeseed protein isolate | 3.5 | 3.5 | 3.5 | 3.5 | 3.5 | 3.5 | 3.5 |
| Sodium chloride | 0.08 | 0.08 | 0.08 | 0.08 | 0.08 | 0.08 | 0.08 |
| Tricalcium phosphate | 0.33 | 0.33 | 0.33 | 0.33 | 0.33 | 0.33 | 0.33 |
| High acyl-gellan | | 0.04 | 0.04 | | 0.04 | | 0.04 |
| CMC | | 0.4 | 0.6 | | | | |
| Sodium alginate | | | | 0.6 | 0.6 | 0.6 | |
| LM-pectin | | | | | | | 0.6 |
| Locust bean gum | | | | | | 0.1 | |
| Sunflower oil | 1.8 | 1.8 | | 1.8 | 1.8 | 1.8 | 1.8 |
| Sunflower lecithin | 0.2 | 0.2 | | 0.2 | 0.2 | 0.2 | 0.2 |

All products came out smoothly from the processing, however some showed sedimentation, as is indicated in the Table below.

**Table: Percentage of sediment (visual observation) after given time of drinks of previous Table**

| | 1 hour | 1 day | 1 week |
|---|---|---|---|
| Emulsion no hydrocolloids | 28 | 68 | 75 |
| Standard CMC + gellan | 0 | 0 | 0 |
| Standard CMC + gellan, no oil | 13 | 19 | 50 |
| Sodium alginate, no gellan | 0 | 0 | 0 |
| Sodium alginate + gellan | 0 | 0 | 0 |
| Sodium alginate + locust bean gum | 0 | 1 | 1 |
| Pectin + gellan | 6 | 43 | 63 |

The sedimentation pattern given in the Table shows that the standard emulsion with CMC and gellan was stable. When the hydrocolloids were left out, the protein and oil droplets and the calcium phosphate rapidly sedimented. Without the oil, the protein flocs slowly sedimented under these conditions, showing that the presence of oil makes the composition more stable. Furthermore, it shows that the stability could be obtained also by sodium alginate, alone or in combination with high acyl-gellan or locust bean gum. In a stress test by extra centrifugation (10,000 rpm for 15 minutes at 20°C, using a Thermo Scientific centrifuge (Sorvall RC 6 Plus, F10S 6X500Y rotor)) it was shown that the combination of alginate and gellan was more stable, leaving nearly all protein suspended, whereas in the absence the amount of protein in the supernatant halved compared to the uncentrifuged product. The combination with LM Pectin replacing CMC, with high acyl-gellan, also leads to more stability than the product without hydrocolloids, although in practice a higher pectin concentration might be needed. The pH of the products was 7.3 +/- 0.2, except for the product with pectin, that lowered to 6.9. It was concluded that hydrocolloids are needed to keep the protein-based emulsions stable, and that CMC can be replaced by sodium alginate or LM pectin and that the role of high acyl-gellan to keep flocs of protein coated oil droplets and calcium suspended can also be taken up by for instance locust bean gum. Also it was shown that the emulsion state is more stable than the protein flocs without oil droplets (similar to Example 5).

### Example 12

### Emulsion-based drinks with various hydrocolloid systems

Emulsions with overall the same composition, but with different hydrocolloids, see Table below, were prepared in the same way as described in the previous examples, and analyzed only by visual observation. It was shown that addition of low acyl-gellan led to improved stability.

**Table: Variation of hydrocolloids**

| # | Hydrocolloid mixture | Remarks |
|---|---|---|
| A | 0.04% high acyl-gellan + 0.4% CMC | Standard composition: stable |
| B | 0.04% high acyl-gellan | Unstable |
| C | 0.04% high acyl-gellan + 0.04% low acyl-gellan | Medium instability, higher concentration needed |

## Claims

1. A composition comprising rapeseed protein, a hydrocolloid and a vegetable oil, wherein the amount of rapeseed protein relative to the total composition is from 0.5-10% (w/w), the total amount of hydrocolloid is from 0.02-1% (w/w) and vegetable oil is from 0.5-80% (w/w), and wherein the weight ratio between oil and protein is at least 1:3.

2. Composition according to claim 1, further comprising water.

3. Composition according to either claim 1 or claim 2, wherein the amount of vegetable oil is 0.6 to 30% (w/w) or 0.5 to 15% (w/w).

4. Composition according to any one of the preceding claims, further comprising an emulsifier, preferably the amount of emulsifier being 0.05 to 0.5% (w/w).

5. Composition according to any one of the preceding claims, said composition having a pH, when measured at 20±2°C between 6.5 and 8.0.

6. Composition according to any one of the preceding claims further comprising sweetening agents and/or flavoring agents and/or coloring agents and/or calcium salts.

7. Composition according to any one of the preceding claims wherein said rapeseed protein is native rapeseed protein isolate comprising 40 to 65% (w/w) cruciferins and 35 to 60% (w/w) napins, the sum of cruciferins and napins not exceeding 100% (w/w), wherein the native rapeseed protein isolate comprises at least 5% (on dry matter) 12S rapeseed protein where the presence of 12S is verified by Blue Native PAGE.

8. Composition according to any one of the preceding claims wherein said hydrocolloid is gellan gum and/or carboxymethyl cellulose and/or alginate and/or locust bean gum and/or pectin and/or guar gum and/or wherein said emulsifier is lecithin.

9. Composition according to claim 8, wherein said gellan gum is high acyl gellan gum, low acyl gellan gum or a combination thereof.

10. Composition according to any one of the preceding claims, which is a beverage, preferably a beverage which is in the form of a concentrate, a powder or a liquid beverage.

11. Composition according to claim 10, wherein the rapeseed protein is present in the beverage in an amount of 1 to 8% (w/w), 1.5 to 5% (w/w) or 2 to 5% (w/w) by weight of the beverage and/or wherein the vegetable oil is present in an amount up to 6% (w/w) or 2.0 to 5.0% (w/w) by weight of the beverage.

12. Composition according to claim 10 or 11, wherein the beverage comprises sugars in an amount of 0.5 to 10% (w/w) by weight of the beverage, or alternative sweeteners, such as aspartame, sucralose, sugar alcohols or steviol glycosides and/or wherein the composition further comprises another plant material, preferably wherein the plant material is chosen from soybean, pea, chickpea, fava bean, lentil, mung bean, peanut, lupin, camelina, sesame, sunflower, wheat, barley, oat, rice, sorghum, quinoa, buckwheat, almonds, hazelnut, walnut, cashew, coconut and potato..

13. Composition according to any of the claims 10 to 12, wherein the beverage is a shelf-stable ready-to-drink beverage that is stable for at least nine months at 20±2°C.

14. A method for the preparation of a composition comprising rapeseed protein, a hydrocolloid, a vegetable oil, and water comprising the steps of:
a) Preparing an aqueous solution comprising rapeseed protein,
b) Preparing an aqueous solution comprising a hydrocolloid,
c1) Mixing a vegetable oil and the solution obtained in step a), followed by addition of the mixture obtained in step b), or
c2) Mixing the solutions obtained in steps a) and b), followed by addition of a vegetable oil,
d) Emulsifying the mixture obtained in steps d) or c2);
wherein the composition complies with the requirements of any one of claims 1 to 13.

15. Use of a composition according to any one of claims 1 to 9 in the preparation of a food product such as a beverage.

## Patentansprüche

1. Zusammensetzung, umfassend Rapsprotein, ein Hydrokolloid und ein Pflanzenöl, wobei die Menge an Rapsprotein in Bezug auf die Gesamtzusammensetzung 0,5-10 Gew.-%, die Gesamtmenge an Hydrokolloid 0,02-1 Gew.-% und Pflanzenöl 0,5-80 Gew.-% beträgt und wobei das Gewichtsverhältnis zwischen Öl und Protein bei mindestens 1:3 liegt.

2. Zusammensetzung nach Anspruch 1, ferner umfassend Wasser.

3. Zusammensetzung nach entweder Anspruch 1 oder Anspruch 2, wobei die Menge an Pflanzenöl 0,6 bis 30 Gew.-% oder 0,5 bis 15 Gew.-% beträgt.

4. Zusammensetzung nach einem der vorhergehenden Ansprüche, ferner umfassend einen Emulgator, wobei die Menge an Emulgator vorzugsweise 0,05 bis 0,5 Gew.-% beträgt.

5. Zusammensetzung nach einem der vorhergehenden Ansprüche, wobei die Zusammensetzung einen bei 20±2 °C gemessenen pH-Wert zwischen 6,5 und 8,0 aufweist.

6. Zusammensetzung nach einem der vorhergehenden Ansprüche, ferner umfassend Süßstoffe und/oder Geschmacksstoffe und/oder Farbstoffe und/oder Calciumsalze.

7. Zusammensetzung nach einem der vorhergehenden Ansprüche, wobei es sich bei dem Rapsprotein um natives Rapsproteinisolat mit 40 bis 65 Gew.-% Cruciferinen und 35 bis 60 Gew.-% Napinen handelt, wobei die Summe an Cruciferinen und Napinen nicht über 100 Gew.-% liegt, wobei das native Rapsproteinisolat mindestens 5 % (bezogen auf die Trockenmasse) 12S-Rapsprotein umfasst, wobei das Vorhandensein von 12S durch Blue Native PAGE bestätigt wird.

8. Zusammensetzung nach einem der vorhergehenden Ansprüche, wobei es sich bei dem Hydrokolloid um Gellan und/oder Carboxymethylcellulose und/oder Alginat und/oder Johannisbrotkernmehl und/oder Pektin und/oder Guaran handelt und/oder wobei es sich bei dem Emulgator um Lecithin handelt.

9. Zusammensetzung nach Anspruch 8, wobei es sich bei dem Gellan um Gellan mit hohem Acylanteil, Gellan mit niedrigen Acylanteil oder eine Kombination davon handelt.

10. Zusammensetzung nach einem der vorhergehenden Ansprüche, bei der es sich um ein Getränk, vorzugsweise ein Getränk, das in Form eines Konzentrats, eines Pulvers oder eines flüssigen Getränks vorliegt, handelt.

11. Zusammensetzung nach Anspruch 10, wobei das Rapsprotein in dem Getränk in einer Menge von 1 bis 8 Gew.-%, 1,5 bis 5 Gew.-% oder 2 bis 5 Gew.-% des Getränks vorliegt und/oder wobei das Pflanzenöl in einer Menge von bis zu 6 Gew.-% oder 2,0 bis 5,0 Gew.-% des Getränks vorliegt.

12. Zusammensetzung nach Anspruch 10 oder 11, wobei das Getränk Zucker in einer Menge von 0,5 bis 10 Gew.-% des Getränks oder alternative Süßungsmittel wie Aspartam, Sucralose, Zuckeralkohole oder Steviolglykoside umfasst und/oder wobei die Zusammensetzung ferner einen weiteren pflanzlichen Stoff umfasst, wobei der pflanzliche Stoff vorzugsweise aus Sojabohne, Erbse, Kichererbse, Ackerbohne, Linse, Mungbohne, Erdnuss, Lupine, Camelina, Sesam, Sonnenblume, Weizen, Gerste, Hafer, Reis, Sorghum, Quinoa, Buchweizen, Mandeln, Haselnuss, Walnuss, Cashew, Kokosnuss und Kartoffel gewählt ist.

13. Zusammensetzung nach einem der Ansprüche 10 bis 12, wobei es sich bei dem Getränk um ein lagerstabiles trinkfertiges Getränk handelt, das bei 20±2 °C mindestens neun Monate stabil ist.

14. Verfahren zur Herstellung einer Rapsprotein, ein Hydrokolloid, ein Pflanzenöl und Wasser umfassenden Zusammensetzung, umfassend die Schritte:
a) Herstellen einer Rapsprotein umfassenden wässrigen Lösung,
b) Herstellen einer ein Hydrokolloid umfassenden wässrigen Lösung,
c1) Mischen eines Pflanzenöls mit der in Schritt a) erhaltenen Lösung, gefolgt von der Zugabe der in Schritt b) erhaltenen Mischung, oder
c2) Mischen der in den Schritten a) und b) erhaltenen Lösungen, gefolgt von der Zugabe eines Pflanzenöls,
d) Emulgieren der in Schritt d) oder c2) erhaltenen Mischung;
wobei die Zusammensetzung die Anforderungen gemäß einem der Ansprüche 1 bis 13 erfüllt.

15. Verwendung einer Zusammensetzung nach einem der Ansprüche 1 bis 9 bei der Herstellung eines Lebensmittelprodukts wie eines Getränks.

## Revendications

1. Composition comprenant des protéines de colza, un hydrocolloïde et une huile végétale, dans laquelle la quantité de protéines de colza par rapport à la composition totale est de 0,5 à 10 % (p/p), la quantité totale d'hydrocolloïde est de 0,02 à 1 % (p/p) et l'huile végétale est de 0,5 à 80 % (p/p), et dans laquelle le rapport pondéral entre l'huile et les protéines est d'au moins 1:3.

2. Composition selon la revendication 1, comprenant en outre de l'eau.

3. Composition selon la revendication 1 ou la revendication 2, dans laquelle la quantité d'huile végétale est de 0,6 à 30 % (p/p) ou de 0,5 à 15 % (p/p).

4. Composition selon l'une quelconque des revendications précédentes, comprenant en outre un émulsifiant, de préférence la quantité d'émulsifiant étant de 0,05 à 0,5 % (p/p).

5. Composition selon l'une quelconque des revendications précédentes, ladite composition ayant un pH, lorsqu'il est mesuré à 20 ± 2 °C, compris entre 6,5 et 8,0.

6. Composition selon l'une quelconque des revendications précédentes, comprenant en outre des agents édulcorants et/ou des agents aromatisants et/ou des agents colorants et/ou des sels de calcium.

7. Composition selon l'une quelconque des revendications précédentes, dans laquelle lesdites protéines de colza sont un isolat de protéines de colza natives comprenant 40 à 65 % (p/p) de cruciférines et 35 à 60 % (p/p) de napines, la somme des cruciférines et des napines n'excédant pas 100 % (p/p), dans laquelle l'isolat de protéines de colza natives comprend au moins 5 % (sur matière sèche) de protéines de colza 12S où la présence de 12S est vérifiée par Blue Native PAGE.

8. Composition selon l'une quelconque des revendications précédentes, dans laquelle ledit hydrocolloïde est de la gomme gellane et/ou de la carboxyméthylcellulose et/ou de l'alginate et/ou de la gomme de caroube et/ou de la pectine et/ou de la gomme de guar et/ou dans laquelle ledit émulsifiant est de la lécithine.

9. Composition selon la revendication 8, dans laquelle ladite gomme gellane est une gomme gellane à haute teneur en acyle, une gomme gellane à faible teneur en acyle ou une combinaison de celles-ci.

10. Composition selon l'une quelconque des revendications précédentes, qui est une boisson, de préférence une boisson qui est sous la forme d'un concentré, d'une poudre ou d'une boisson liquide.

11. Composition selon la revendication 10, dans laquelle les protéines de colza sont présentes dans la boisson en une quantité de 1 à 8 % (p/p), 1,5 à 5 % (p/p) ou 2 à 5 % (p/p) en poids de la boisson et/ou dans laquelle l'huile végétale est présente en une quantité allant jusqu'à 6 % (p/p) ou 2,0 à 5,0 % (p/p) en poids de la boisson.

12. Composition selon la revendication 10 ou 11, dans laquelle la boisson comprend des sucres en une quantité de 0,5 à 10 % (p/p) en poids de la boisson, ou des édulcorants alternatifs, tels que l'aspartame, le sucralose, des alcools de sucre ou des glycosides de stéviol et/ou dans laquelle la composition comprend en outre une autre matière végétale, de préférence dans laquelle la matière végétale est choisie parmi le soja, le pois, le pois chiche, la fève, la lentille, le haricot mungo, l'arachide, le lupin, la caméline, le sésame, le tournesol, le blé, l'orge, l'avoine, le riz, le sorgho, le quinoa, le sarrasin, les amandes, les noisettes, les noix, les noix de cajou, la noix de coco et la pomme de terre.

13. Composition selon l'une quelconque des revendications 10 à 12, dans laquelle la boisson est une boisson prête à boire qui est stable au stockage qui est stable pendant au moins neuf mois à 20 ± 2 °C.

14. Procédé de préparation d'une composition comprenant des protéines de colza, un hydrocolloïde, une huile végétale et de l'eau, comprenant les étapes de :
a) préparation d'une solution aqueuse comprenant des protéines de colza,
b) préparation d'une solution aqueuse comprenant un hydrocolloïde,
c1) mélange d'une huile végétale et de la solution obtenue à l'étape a), puis ajout du mélange obtenu à l'étape b), ou
c2) mélange des solutions obtenues aux étapes a) et b), suivi par l'ajout d'une huile végétale,
d) émulsification du mélange obtenu aux étapes d) ou c2) ;
dans lequel la composition satisfait aux exigences de l'une quelconque des revendications 1 à 13.

15. Utilisation d'une composition selon l'une quelconque des revendications 1 à 9 dans la préparation d'un produit alimentaire tel qu'une boisson.
